# FASCICULE DE BREVET EUROPEEN

(11) **EP 2 927 491 B1**
(45) Date de publication et mention de la délivrance du brevet: **09.10.2019**
(21) Numéro de dépôt: 15156273.3
(22) Date de dépôt: 24.02.2015
(51) Int. Cl.: F04D 29/62, H02K 5/22, H02K 7/14, F04B 17/03, F04D 13/06, F04B 53/16, F04B 53/22, H02K 5/128

(54) **POMPE DE CIRCULATION DE FLUIDE MUNIE D'UN MOTEUR COMPORTANT DEUX PARTIES MONTEES LIBRES EN ROTATION**
FLUID-UMWÄLZPUMPE, DIE MIT EINEM MOTOR AUSGESTATTET IST, DER ZWEI SICH FREI DREHENDE MONTIERTE TEILE UMFASST
FLUID CIRCULATION PUMP PROVIDED WITH A MOTOR WHICH COMPRISES TWO PARTS MOUNTED FREELY IN ROTATION

(30) Priorité: 04.03.2014 FR 1451766
(43) Date de publication de la demande: 07.10.2015
(73) Titulaire: Wilo Salmson France, 78400 Chatou (FR)
(72) Inventeur: Pottier, Xavier, 53970 Montigné-le Brillant (FR); Dejean, Philippe, 53960 Bonchamp Les Laval (FR)
(74) Mandataire: Hirsch & Associés

(56) Documents cités:
- EP-A1- 0 412 858
- EP-A1- 0 732 794
- EP-A1- 2 500 574
- DE-A1- 2 751 516
- DE-A1- 10 107 248
- DE-A1-102007 043 600

## Description

La présente invention concerne une pompe pour la circulation de fluides, en particulier pour la circulation d'eau d'un système de chauffage de bâtiments.

Un type de pompe de circulation connu comporte un moteur électrique du type synchrone qui est fixé par un côté axial appelé par convention côté avant, sur un corps de pompe centrifuge. Ce moteur comporte une partie mécanique contenant un rotor, et une partie électrique contenant un stator.

La partie électrique contient des éléments de contrôle et de commande du moteur, et des moyens de connexion électrique vers l'extérieur.

Une turbine centrifuge est disposée sur l'axe du rotor, dans une chambre du corps de pompe, et aspire en son centre le fluide venant d'une entrée, pour le refouler à sa périphérie avec une certaine pression.

L'environnement dans lequel une telle pompe est installée n'est pas toujours idéal. En particulier, l'espace nécessaire pour connecter électriquement la pompe est parfois insuffisant. Aussi, l'orientation des moyens de connexion et celle des câbles électriques destinés à y être branchés peuvent rendre cette connexion difficile.

EP 2500574 A1 concerne une pompe de circulation de chauffage.

EP 0412858 A1 concerne un stator de moteur électrique et moteur électrique comportant un tel stator.

DE 10 2007 043600 concerne un rotor de pompe pour une pompe à rotor noyé.

La présente invention a notamment pour objectif d'éviter ces inconvénients de la technique antérieure, en proposant un type de pompe qui permet d'orienter ses moyens de connexion électriques en fonction de l'environnement dans lequel est installée ladite pompe.

A cette fin, la présente invention propose une pompe de circulation de fluide selon la revendication 1.

Grâce à ces dispositions, on peut réaliser des interventions de manière simple et rapide en alignant l'un après l'autre les moyens de fixation par rapport au dégagement pour y insérer un outil. Ainsi, les dimensions extérieures de la partie électrique peuvent être plus grandes qu'un périmètre, typiquement un diamètre, sur lequel sont disposés lesdits moyens de fixation. Autrement dit, en n'ayant qu'un seul dégagement pour au moins deux moyens de fixation, on optimise l'encombrement de la partie électrique.

Selon une forme d'exécution de la pompe précitée, la partie électrique comporte un moyen d'obturation du dégagement.

Selon une forme d'exécution de la pompe précitée, le moyen d'obturation du dégagement est un connecteur électrique externe.

Grâce à ces dispositions, on ne peut pas séparer le corps et le moteur électrique tant que la pompe est branchée au réseau électrique.

Selon une autre forme d'exécution de la pompe précitée, le moyen d'obturation du dégagement est un couvercle.

Selon une forme d'exécution de la pompe précitée, ladite bride comporte un rebord circulaire continu sur lequel est fixée la partie électrique.

Selon une forme d'exécution de la pompe précitée, la fixation de la partie électrique sur la bride est réalisée par des clips disposés sur une surface extérieure de ladite partie électrique.

Grâce à ces dispositions, on n'a pas besoin d'outil pour défaire la partie électrique de la bride.

Selon une forme d'exécution de la pompe précitée, elle comporte en outre un système d'arrêt configuré pour empêcher toute rotation intempestive de la partie électrique par rapport à la partie mécanique.

Grâce à ces dispositions, on réduit les risques engendrés par le fonctionnement de la pompe.

Selon une forme d'exécution de la pompe précitée, les clips et la surface extérieure de la partie électrique sont réalisés par moulage.

Selon une forme d'exécution de la pompe précitée, la partie électrique comporte
- un deuxième dégagement permettant un accès simultané aux deux moyens de fixation,
- un moyen d'obturation dudit deuxième dégagement.

Grâce à ces dispositions, on peut défaire les deux moyens de fixation simultanément.

L'invention a également pour objet un procédé de séparation du corps et du moteur électrique d'une telle pompe de circulation, dans lequel
- on défait le moyen d'obturation du dégagement,
- on aligne le dégagement et le moyen de fixation, puis
- on défait le moyen de fixation.

D'autres caractéristiques et avantages de l'invention apparaîtront à la lecture de la description qui suit présentant des modes de réalisation préférés de l'invention donnés à titre d'exemple, en référence aux dessins annexés suivants:
- la figure 1 est une vue éclatée en perspective d'une pompe de circulation selon l'invention, comprenant un dégagement d'accès à un moyen de fixation ;
- la figure 2 est une vue de cette pompe présentant l'accès à un moyen de fixation de la partie mécanique par un outil passant dans le dégagement ;
- les figures 3a à 3c présentent pour cette pompe en vue de face, trois opérations successives de démontage des moyens de fixation de la partie mécanique ;
- la figure 4 présente une pompe réalisée suivant une variante, comprenant un dégagement d'accès.

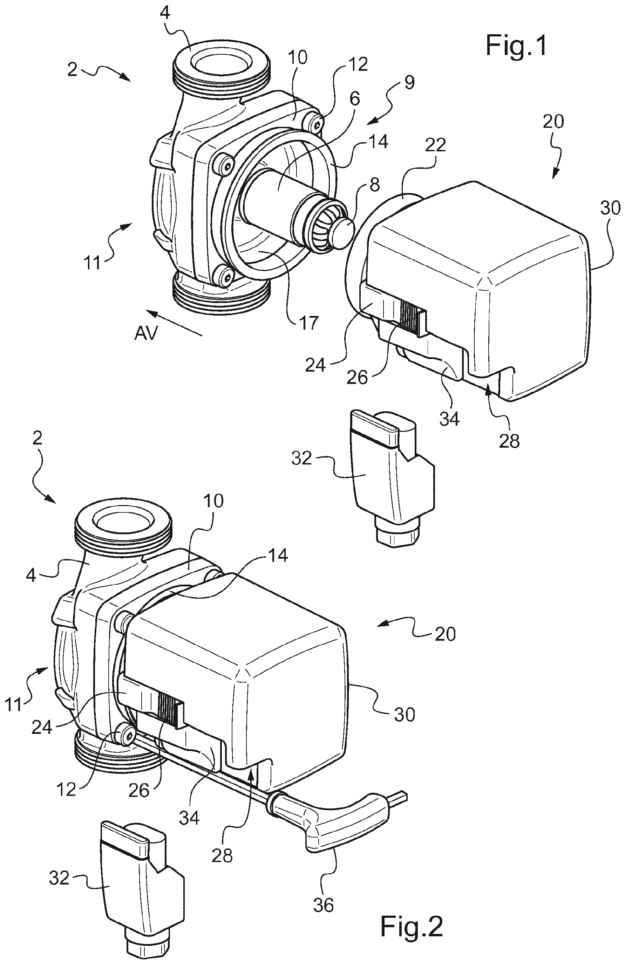

La figure 1 présente une pompe 2 de circulation de fluide comprenant un corps 4 et un moteur électrique 9 fixés l'un à l'autre. Le moteur 9 comporte deux parties distinctes, à savoir une partie mécanique 11 contenant un rotor, et une partie électrique 20 contenant un stator.

Dans l'exemple, le moteur 9 est du type à rotor noyé, ce rotor étant inséré dans un tube d'entrefer fermé 6 fixé de manière étanche sur le corps 4 de la pompe 2, qui vient à l'intérieur des bobines du stator pour les isoler. Ce tube étanche reçoit de la pompe 2 un petit flux d'eau le traversant.

Le corps 4, habituellement réalisé en fonderie, contient dans une chambre hydraulique une turbine centrifuge de circulation du fluide fixée à l'extrémité avant (indiquée par la flèche AV) d'un axe du rotor, aspirant l'eau par l'entrée inférieure pour la refouler par la sortie supérieure.

Le rotor est intégré dans le tube étanche 6 contenant à chacune de ses extrémités un palier. L'extrémité avant du tube 6 est fixée de manière étanche à une bride 10 qui ferme le côté arrière de la chambre contenant la turbine. L'extrémité arrière du tube 6 comporte un bouchon de purge 8 vissé suivant l'axe de ce tube.

Selon l'invention, la bride 10 est fixée sur le corps par au moins deux, typiquement quatre, moyens de fixation 12.

Dans l'exemple, la bride 10 comprenant un contour extérieur globalement carré, ajusté sur le contour extérieur du corps de la pompe 4, est serré sur ce corps 4 par quatre vis axiales 12. On a en particulier dans cet exemple, quatre vis de serrage 12 disposées dans les angles du carré, suivant deux lignes horizontales.

Un contour extérieur de l'extrémité avant du tube 6 est inséré entre la bride 10 et le corps de la pompe 4, pour être maintenu de manière étanche par le même serrage.

La bride 10 comporte radialement à l'intérieur des vis de serrage 12, un épaulement circulaire centré sur l'axe et tourné vers l'arrière. Cet épaulement circulaire forme une cavité cylindrique 17 centrée sur l'axe du rotor et se termine par un rebord continu 14 tourné vers l'extérieur.

On réalise ainsi avec le tube 6 fixé au corps 4 de pompe 2, le maintien ainsi que l'étanchéité du rotor contenu dedans, indépendamment du montage de la partie électrique 20 sur la bride 10.

La partie électrique 20 comporte un boîtier électrique 30 de section extérieure globalement carrée, contenant la commande électronique du moteur 9, une connexion électrique 34 vers l'extérieur, et éventuellement des commandes externes de régulation ou de réglage de la pompe 2.

Le boîtier électrique 30 peut comporter en particulier à l'arrière du stator une carte électronique disposée transversalement, supportant les différents composants électroniques.

Le boîtier électrique 30 couvre les bobinages du stator et se termine à l'avant par un cylindre de centrage 22 comprenant une butée circulaire extérieure. Le cylindre de centrage 22 s'ajuste dans la cavité 17 de l'épaulement arrière de la bride 10, en mettant sa butée extérieure en appui sur la bride de manière à réaliser un centrage ainsi qu'un équerrage.

Le boîtier électrique 30 comporte un angle inférieur découpé donnant un creux allongé formant un dégagement 28 qui constitue un passage axial venant en face d'une des vis de serrage 12 de la bride 10. Le dégagement 28 permet, par rotation de la partie électrique 20, un accès successif aux vis 12.

Un connecteur électrique externe 32 est raccordé à des fils électriques extérieurs et entre dans le creux allongé 28 pour se fixer sur la connexion électrique 34 du boîtier électrique 30.

Le boîtier électrique 30 comporte sur son contour extérieur deux clips 24 disposés en deux points diamétralement opposés, entre deux vis de serrage 12, formant chacun un crochet tourné vers l'avant et vers l'axe du moteur 9.

De préférence, chaque clip 24 est réalisé par moulage avec le boîtier électrique 30 et y est relié par une articulation constituée d'une fine épaisseur de matière plastique disposée suivant une ligne tangentielle, ce qui permet un pivotement autour de cette ligne en appuyant sur un levier arrière 26 de ce clip. L'articulation comprend un rappel élastique du clip 24 en position fermée.

Un emboîtement de la partie électrique 20 sur la bride 10, en pressant axialement dessus, réalise son centrage par l'ajustage dans la cavité 17 de cette bride, puis une fois que cette partie électrique est arrivée en butée, un clipsage automatique des deux clips 24 sur le rebord extérieur continu 14 de la bride 10, assurant son maintien en position.

À l'inverse une pression sur les leviers arrière 26 des clips 24 dégage les crochets avant de ces clips, ce qui permet de retirer la partie électrique 20. On obtient ainsi une partie électrique 20 qui peut être facilement et rapidement montée ou démontée, en particulier pour changer ses composants électroniques, ou pour accéder au bouchon de purge 8.

On notera que le rebord extérieur arrière 14 de la bride 10 étant continu, on peut faire pivoter manuellement la partie électrique 20 autour de l'axe du rotor, les crochets avant des clips 24 coulissant sur ce rebord extérieur 14 en restant fixés dessus.

Dans l'exemple, la surface de friction et l'effort exercé entre les clips 24 et le rebord extérieur 14 sont configurés pour éviter la rotation de la partie électrique 20 sur la partie mécanique 11 au démarrage et pendant le fonctionnement du moteur 9.

Alternativement, un système d'arrêt, tel qu'un ergot sur les clips 24 se logeant dans des rainures radiales aménagées sur le rebord extérieur 14, est réalisé sur la pompe 2. Le nombre de rainures n'est pas limité de façon à autoriser le plus grand nombre de positions angulaires de la partie électrique 20.

Dans le cas d'un moteur 9 de puissance faible, ce système d'arrêt présente une configuration telle que, lorsqu'on fait pivoter manuellement la partie électrique 20 sans agir sur les leviers 26 des clips 24, les ergots se désengagent des rainures. Autrement dit, dans ce cas, la coopération des ergots avec les rainures ainsi que l'effet ressort des clips 24 sont prévus pour empêcher la partie électrique 20 de pivoter toute seule pendant le fonctionnement du moteur 9 tout en permettant à un opérateur/utilisateur de la positionner comme il le souhaite.

Dans le cas d'un moteur 9 de puissance plus élevée, ce système d'arrêt présente une configuration telle que, pour positionner la partie électrique 20, on appuie sur les leviers 26 des clips 24 pour désengager les ergots des rainures et on fait pivoter ladite partie électrique, puis on relâche lesdits leviers pour bloquer la rotation.

La figure 2 présente la mise en place d'un outil 36 de desserrage des vis 12, i.e. un tournevis, dans le logement 28 qui est aligné en face d'une de ces vis, après avoir déposé le connecteur externe 32.

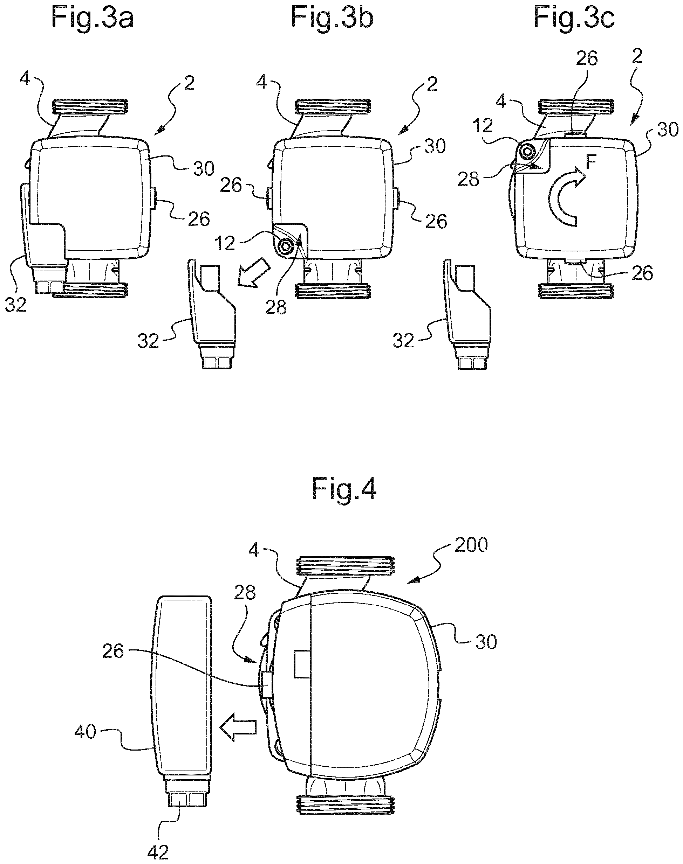

La figure 3a présente la pompe complète, le boîtier électrique 30 de la partie électrique 20 étant équipé de son connecteur externe 32, qui se trouve dans le dégagement 28 en cachant l'accès à la vis de serrage 12 disposée en avant de ce connecteur.

Dans cette position, la pompe 2 étant alimentée en courant électrique par le connecteur externe 32, on ne peut pas dévisser la bride 10 et donc séparer le corps 4 du moteur 9, ce qui constitue une protection assurant la sécurité en évitant des accidents. Avantageusement, par un moyen non représenté, le connecteur externe 32 étant raccordé sur le boîtier électrique 30, empêche une manoeuvre de l'un des deux clips 24 qui réaliserait un démontage de la partie électrique 20 toujours alimentée en courant électrique.

La figure 3b présente la dépose du connecteur externe 32, ce qui coupe l'alimentation en courant électrique de la pompe 2, et donne ensuite l'accès à la première vis de serrage 12 se trouvant en face du dégagement 28.

La figure 3c présente après la dépose de la première vis de serrage 12, la rotation d'un quart de tour vers la droite de la partie électrique 20, indiquée par la flèche F, ce qui donne accès à une deuxième vis de serrage 12.

On réalise ainsi après avoir fait trois fois la même rotation de la partie électrique 20 un desserrage successif des quatre vis 12, ce qui permet de retirer ladite partie électrique, la bride 10 et la partie mécanique 11 qui restent attachées par les clips 24.

En variante suivant le type de pompe, la fixation de la partie électrique 20 sur la partie mécanique 11 peut être non démontable, tout en permettant la rotation entre ces deux parties, ce qui autorise un même procédé de desserrage des vis 12.

On notera que dans sa position de fonctionnement la partie électrique 20 peut avoir une position angulaire quelconque, le dégagement 28 se trouvant en face d'une vis de serrage 12, ou entre deux vis, de manière à positionner au mieux suivant l'environnement le connecteur externe 32 ou les formes extérieures du boîtier électrique 30.

En particulier le boîtier électrique 30 peut dépasser au-dessus de trois des vis de serrage 12, ce qui permet notamment de réaliser une carte électronique disposée transversalement dans ce boîtier, comportant une grande surface avec une dimension supérieure au diamètre de positionnement de ces vis 12.

Dans une variante, la pompe selon l'invention comporte deux dégagements disposés de façon diamétralement opposée l'un par rapport à l'autre.

Dans ce cas, après avoir retiré le connecteur externe, ce qui coupe de la même manière l'alimentation électrique du boîtier, on a accès en même temps à deux vis de serrage diamétralement opposées.

On fait ensuite pivoter la partie électrique sur un demi-tour, donnant ensuite l'accès aux deux autres vis de serrage. On effectue ainsi pour cette pompe, le démontage du moteur électrique en seulement deux opérations.

La figure 4 présente une pompe 200 comportant un boîtier électrique 30 équipé d'un couvercle latéral 40 démonté, dans lequel sont raccordés les fils électriques d'alimentation venant de l'extérieur, qui sortent de ce couvercle 40 par un presse-étoupe 42. Le couvercle 40 s'étend sur une longueur sensiblement égale à une largeur d'une face latérale du boîtier électrique 30.

Le débranchement des fils électriques coupe l'alimentation électrique et donne un dégagement latéral 28 sur le côté du boîtier 30.

On effectue ensuite une première rotation sur un huitième de tour de la partie électrique 20, mettant le dégagement 28 en face d'une première vis de serrage 12, pour la desserrer en y accédant par un outil.

En effectuant ensuite trois rotations de la partie électrique 20 sur un quart de tour, on accède successivement aux autres vis de serrage 12, permettant de démonter en toute sécurité la bride 10 avec ladite partie électrique qui reste fixée dessus.

On obtient ainsi une pompe 200 de circulation permettant des démontages simples et rapides de la bride 10 en laissant la partie électrique 20 fixée dessus, pour par exemple changer en une seule opération le moteur 9 complet de cette pompe 200.

La présente invention n'est pas limitée aux exemples décrits et représentés, elle est susceptible de variantes accessibles à l'homme de l'art, concernant notamment la matière de la bride d'interface, ou ses moyens de fixation sur le corps de pompe, dans la mesure où ces variantes sont couvertes par l'objet respectif des revendications suivantes.

## Revendications

1. Pompe (2 ; 200) de circulation de fluide comprenant un corps (4) et un moteur électrique (9) fixés l'un à l'autre via une bride (10) disposée entre le corps (4) et le moteur électrique (9), ledit moteur comportant deux parties distinctes :
- une partie mécanique (11) contenant un rotor, la partie mécanique (11) étant fixée sur le corps (4) par au moins deux moyens de fixation (12), et
- une partie électrique (20) contenant un stator et un dégagement (28) d'accès au moyen de fixation (12),
**caractérisée en ce que** :
- la bride (10) et la partie électrique (20) sont montées libres en rotation l'une par rapport à l'autre,
- le dégagement (28) de la partie électrique (20) permet, par rotation de la partie électrique (20), un accès successif auxdits au moins deux moyens de fixation (12).

2. Pompe de circulation selon la revendication 1, **caractérisée en ce que** la partie électrique comporte un moyen d'obturation (32 ; 40) du dégagement.

3. Pompe de circulation selon la revendication 2, **caractérisée en ce que** le moyen d'obturation du dégagement est un connecteur électrique externe (32).

4. Pompe de circulation selon la revendication 2, **caractérisée en ce que** le moyen d'obturation du dégagement est un couvercle (40).

5. Pompe de circulation selon la revendication 4, **caractérisée en ce que** le couvercle (40) est configuré pour raccorder des fils électriques d'alimentation venant de l'extérieur.

6. Pompe de circulation selon l'une des revendications 1 à 5, **caractérisé en ce que** la bride comporte un rebord circulaire continu (14) sur lequel est montée la partie électrique (20).

7. Pompe de circulation selon la revendication 6, **caractérisée en ce que** le montage de la partie électrique (20) sur la bride (10) est réalisée par des clips (24) disposés sur une surface extérieure de ladite partie électrique (20).

8. Pompe de circulation selon la revendication 7, **caractérisée en ce que** les clips (24) et la surface extérieure de la partie électrique (20) sont réalisés par moulage.

9. Pompe de circulation selon l'une des revendications 6 à 8, **caractérisée en ce qu'**elle comporte en outre un système d'arrêt configuré pour empêcher toute rotation intempestive de la partie électrique par rapport à la partie mécanique.

10. Pompe de circulation selon la revendication 9, **caractérisée en ce que** le système d'arrêt se loge dans des rainures radiales aménagées sur le rebord extérieur (14).

11. Pompe de circulation selon la revendication 6, **caractérisé en ce que** le rebord circulaire continu (14) forme une surface de friction pour éviter la rotation de la partie électrique (20) sur la bride (10) au démarrage et pendant le fonctionnement du moteur électrique (9).

12. Pompe de circulation selon l'une des revendications 1 à 11, **caractérisée en ce que** la fixation de la partie électrique (20) sur la partie mécanique (11) est non démontable autorisant un même procédé de desserrage des moyens de fixation (12).

13. Pompe de circulation selon l'une quelconque des revendications précédentes, **caractérisée en ce que** la partie électrique comporte :
- un deuxième dégagement (28) permettant un accès simultané aux deux moyens de fixation (12) ;
- un moyen d'obturation dudit deuxième dégagement.

14. Pompe de circulation selon la revendication 13, **caractérisée en ce que** les deux dégagements sont disposés de façon diamétralement opposée l'un par rapport à l'autre.

15. Procédé de séparation du corps (4) et du moteur électrique (9) d'une pompe de circulation selon l'une des revendications 2 à 5, dans lequel
- on défait le moyen d'obturation (32 ; 40) du dégagement,
- on aligne le dégagement et le moyen de fixation (12), puis
- on défait le moyen de fixation.

## Patentansprüche

1. Fluidumwälzpumpe (2; 200), umfassend einen Körper (4) und einen Elektromotor (9), die aneinander über einen Flansch (10) befestigt sind, der zwischen dem Körper (4) und dem Elektromotor (9) angeordnet ist, wobei der Motor zwei getrennte Teile umfasst:
- einen mechanischen Teil (11), der einen Rotor enthält, wobei der mechanische Teil (11) auf dem Körper (4) durch mindestens zwei Befestigungsmittel (12) befestigt ist, und
- einen elektrischen Teil (20), der einen Stator und eine Ausnehmung (28) für den Zugang zum Befestigungsmittel (12) enthält,
**dadurch gekennzeichnet, dass**:
▪ der Flansch (10) und der elektrische Teil (20) frei drehend zueinander angeordnet sind,
▪ die Ausnehmung (28) des elektrischen Teils (20) durch Drehen des elektrischen Teils (20) nacheinander einen Zugang zu den mindestens zwei Befestigungsmitteln (12) ermöglicht.

2. Umwälzpumpe nach Anspruch 1, **dadurch gekennzeichnet, dass** der elektrische Teil ein Verschlussmittel (32; 40) der Ausnehmung umfasst.

3. Umwälzpumpe nach Anspruch 2, **dadurch gekennzeichnet, dass** das Verschlussmittel der Ausnehmung ein externer elektrischer Verbinder (32) ist.

4. Umwälzpumpe nach Anspruch 2, **dadurch gekennzeichnet, dass** das Verschlussmittel der Ausnehmung ein Deckel (40) ist.

5. Umwälzpumpe nach Anspruch 4, **dadurch gekennzeichnet, dass** der Deckel (40) eingerichtet ist, um von außen kommende Stromversorgungsdrähte anzuschließen.

6. Umwälzpumpe nach einem der Ansprüche 1 bis 5, **dadurch gekennzeichnet, dass** der Flansch eine kontinuierliche kreisförmige Umrandung (14) umfasst, auf der der elektrische Teil (20) montiert ist.

7. Umwälzpumpe nach Anspruch 6, **dadurch gekennzeichnet, dass** die Montage des elektrischen Teils (20) auf dem Flansch (10) durch Clips (24) erfolgt, die auf einer Außenfläche des elektrischen Teils (20) angeordnet sind.

8. Umwälzpumpe nach Anspruch 7, **dadurch gekennzeichnet, dass** die Clips (24) und die Außenfläche des elektrischen Teils (20) durch Formguss hergestellt sind.

9. Umwälzpumpe nach einem der Ansprüche 6 bis 8, **dadurch gekennzeichnet, dass** sie ferner ein Sperrsystem umfasst, das eingerichtet ist, um jede ungewollte Drehung des elektrischen Teils in Bezug zum mechanischen Teil zu verhindern.

10. Umwälzpumpe nach Anspruch 9, **dadurch gekennzeichnet, dass** das Sperrsystem in radialen Nuten angeordnet ist, die auf der äußeren Umrandung (14) vorgesehen sind.

11. Umwälzpumpe nach Anspruch 6, **dadurch gekennzeichnet, dass** die kontinuierliche kreisförmige Umrandung (14) eine Reibungsfläche bildet, um die Drehung des elektrischen Teils (20) auf dem Flansch (10) beim Start und während des Betriebs des Elektromotors (9) zu vermeiden.

12. Umwälzpumpe nach einem der Ansprüche 1 bis 11, **dadurch gekennzeichnet, dass** die Befestigung des elektrischen Teils (20) auf dem mechanischen Teil (11) nicht demontierbar ist, wobei ein selbes Verfahren zum Lösen der Befestigungsmittel (12) gestattet wird.

13. Umwälzpumpe nach einem der vorhergehenden Ansprüche, **dadurch gekennzeichnet, dass** der elektrische Teil umfasst:
- eine zweite Ausnehmung (28), die einen gleichzeitigen Zugang zu den zwei Befestigungsmitteln (12) ermöglicht;
- ein Verschlussmittel der zweiten Ausnehmung.

14. Umwälzpumpe nach Anspruch 13, **dadurch gekennzeichnet, dass** die zwei Ausnehmungen einander diametral gegenüberliegend angeordnet sind.

15. Verfahren zur Trennung des Körpers (4) und des Elektromotors (9) einer Umwälzpumpe nach einem der Ansprüche 2 bis 5, bei dem
- das Verschlussmittel (32; 40) von der Ausnehmung gelöst wird,
- die Ausnehmung und das Befestigungsmittel (12) ausgerichtet werden, dann
- das Befestigungsmittel gelöst wird.

## Claims

1. A fluid circulating pump (2; 200) comprising a body (4) and an electric motor (9) fixed to each other via a flange (10) located between the body (4) and the electric motor (9), said motor comprising two distinct parts:
- a mechanical part (11) containing a rotor, the mechanical part (11) being fixed on the body (4) by at least two fastening means (12), and
- an electrical part (20) containing a stator and an access clearance (28) to the fastening means (12),
**characterized in that**:
- the flange (10) and the electrical part (20) are mounted free to rotate with respect to each other,
- the clearance (28) of the electrical part (20) allows, by rotating the electrical part (20) a successive access to the said at least two fastening means (12).

2. The circulating pump according to claim 1, **characterized in that** the electrical part comprises a closure means (32; 40) for the clearance.

3. The circulating pump according to claim 2, **characterized in that** the closure means for the clearance is an external electrical connector (32).

4. The circulating pump according to claim 2, **characterized in that** the closure means for the clearance is a lid (40).

5. The circulating pump according to claim 4, **characterized in that** the lid (40) is configured to connect power wires from the outside.

6. The circulating pump according to any one of claims 1 to 5, **characterized in that** the flange has a continuous circular edge (14) on which the electrical part (20) is mounted.

7. The circulating pump according to claim 6, **characterized in that** the mounting of the electrical part (20) on the flange (10) is realized by clips (24) disposed on an outer surface of said electrical part (20).

8. The circulating pump according to claim 7, **characterized in that** the clips (24) and the outer surface of the electrical part (20) are made by moulding.

9. The circulating pump according to any one of claims 6 to 8, **characterized in that** it also includes a shut-off system configured to prevent any inadvertent rotation of the electrical part in relation to the mechanical part.

10. The circulating pump according to claim 9, **characterized in that** the shut-off system is housed in radial grooves on the outside edge (14).

11. The circulating pump according to claim 6, **characterized in that** the continuous circular edge (14) forms a frictional surface to prevent the rotation of the electrical part (20) on the flange (10) at start-up and during operation of the electric motor (9).

12. The circulating pump according to any one of claims 1 to 11, **characterized in that** the fastening of the electrical part (20) on the mechanical part (11) is non-detachable allowing the same method of loosening the fastening means (12).

13. The circulating pump according to any one of preceding claims, **characterized in that** the electrical part comprises:
- a second clearance (28) allowing simultaneous access to both fastening means (12);
- a closure means for said second clearance.

14. The circulating pump according to claim 13, **characterized in that** both clearances are located diametrically opposed to each other.

15. Method for separating a body (4) and an electric motor (9) of a circulating pump according to any one of claims 2 to 5, comprising
- undoing the closure means (32; 40) of the clearance,
- aligning the clearance and the fastening means (12), and
- undoing the fastening means.
